(19) Europäisches Patentamt
European Patent Office
Office européen des brevets

(11) **EP 2 469 951 A1**

(12) **EUROPEAN PATENT APPLICATION**

(43) Date of publication:
**27.06.2012 Bulletin 2012/26**

(51) Int Cl.:
***H04W 72/08*** (2009.01)   ***H04W 84/04*** (2009.01)

(21) Application number: **10015988.8**

(22) Date of filing: **22.12.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **MIMOON GmbH**
**47057 Duisburg (DE)**

(72) Inventors:
• **Wu, Hanguang**
  **47057 Duisburg (DE)**
• **Mulder, Willem**
  **47057 Duisburg (DE)**
• **Marandin, Dimitry**
  **47057 Duisburg (DE)**

(74) Representative: **Eisenführ, Speiser & Partner**
**Postfach 31 02 60**
**80102 München (DE)**

(54) **Method and apparatus for distance-based resource scheduling in heterogeneous cellular networks**

(57)   The present invention relates to a method and apparatus for protecting a channel of a neighboring or overlapping cell (10) from interference caused by a target cell (12) in a cellular network. To achieve this, a parameter indicating strength of a signal received from the neighboring or overlapping cell (10) is measured and maximum allowable resources which can be scheduled in the target cell (12) are determined based on the measured parameter. Then, resources are allocated to terminal devices (32) served by the target cell (12) so that the maximum allowable resources are not exceeded.

Fig. 1

**Description**

FIELD OF THE INVENTION

The present invention relates to a method, apparatus and computer program product for interference control and resource management in heterogeneous cellular networks, such as Orthogonal Frequency Division Multiplexing (OFDM) networks, with co-channel deployment of macro base stations (macro cells) and home base stations (femto cells).

BACKGROUND OF THE INVENTION

Home base stations (HBTSs) or home evolved NodeBs (HeNBs) - also known as "femto cells" - are small base stations operating in licensed cellular bands. In general, base stations are called "NodeBs" in Wideband Code Division Multiple Access (WCDMA) networks and "eNodeBs" in Long Term Evolution (LTE) networks. The HeNBs are small and inexpensive, and transmit at low power. They are placed in individual homes and backhauled onto the operator's network via conventional digital subscriber line (DSL) or cable broadband access (or, if available, fiber access).

Deployment of HeNBs helps to reduce the capital and operational expenditure of operators while enhancing system indoor coverage and capacity. However, interference is an issue that needs to be addressed to successfully deploy a HeNB layer over existing macro cell networks. The impact of interference depends on the techniques used for allocating spectral resources to the macro cell and femto cell layers, as well as on the techniques used to access the femto cells. In an orthogonal deployment of macro cells and femto cells, where separate orthogonal carriers are assigned to each layer, cross-layer interference is entirely removed. Carriers are said to be orthogonal if they are uncorrelated. However, this happens at the expense of decreasing the spectral efficiency of the network. For co-channel deployments, where the carriers are shared between both layers, new interference management techniques are required for intelligent allocation of the power, frequency, and time resources of the HeNBs.

In co-channel deployments, interference is strongly dependent on the type of access control, which determines if a given user can or cannot connect to the HeNB. If cell access restrictions apply, such as closed access (also referred to as closed subscriber group (CSG) by 3rd Generation Partnership Project (3GPP)), the HeNB allows access to only a subset of users, defined by the HeNB owner. In scenarios with CSG-HeNBs, non-subscribers are not allowed to connect to the network through a femto cell, even if its signal is stronger than that of the closest macro cell. Therefore, strong cross-layer interference exists between macro- and femto-layers.

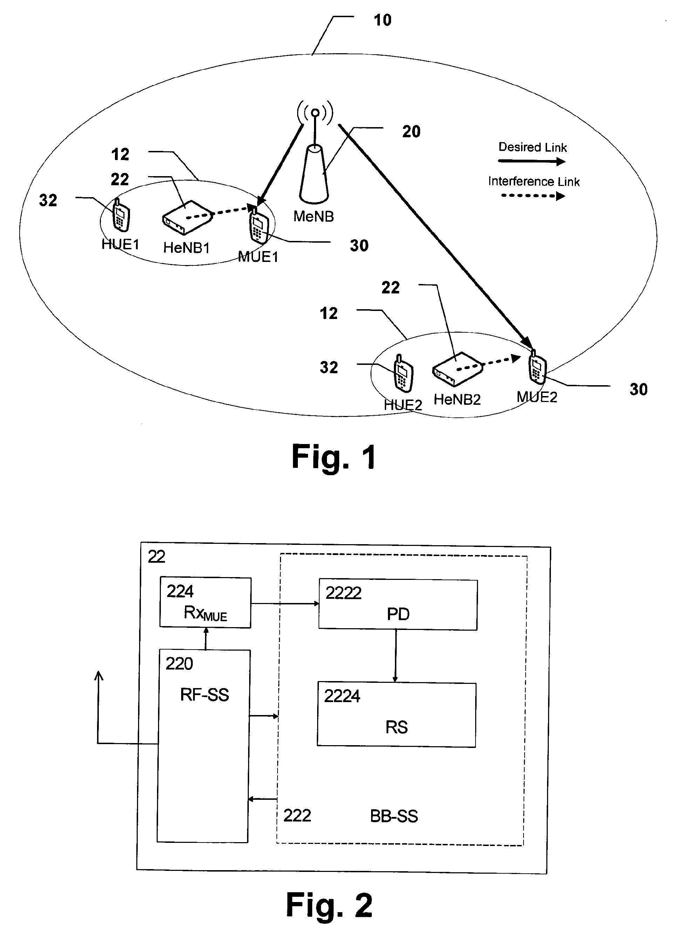

Fig. 1 shows a typical downlink interference scenario with co-channel deployment of marco cells 10 and femto cells 12. Within the coverage of a marco cell 10, multiple femto cells 12 are deployed, in which HeNBs (HeNB1 and HeNB2) 22 serve home terminal devices or home user equipments (HUEs) (HUE1 and HUE2) 32. Typically, marco terminal devices or macro user equipments (MUE$_S$) (MUE1 and MUE2) 30, which are in the coverage area of the macro cell 10 and served by a macro base station (MBTS or MeNB) 20, may be inside or near the coverage of a femto cell 12. It is further assumed that the MUEs 30 are not allowed to connect to the HeNBs 22 of the femto cells 12 even if they receive stronger signals from the femto cells 12, because they are not members of the CSG. As a consequence, the MUEs 30 in the vicinity of the femto cells 12 may experience strong interference (indicated by the broken arrows in Fig. 1) from the nearby HeNBs 22, which degrades their performance and even causes communication failure due to the too low signal-to-interference-and-noise ratio (SINR) condition. Such MUEs 30 are therefore commonly referred to as "victim MUEs", as they suffer from interference caused by the HeNBs 22.

Conventional approaches to mitigate the above interference problem can be classified into the categories of power control, time partitioning and frequency partitioning.

For power control, most of the proposals are to control the HeNB downlink transmission power such that the created interference from the HeNB 22 to the MUE 30 is restricted (see for example specifications R4-094245 "Interference control for LTE Rel-9 HeNB cells", Nov. 2009 and R4-093557 "HeNB to Macro eNB Downlink Interference Mitigation with Power Control", Oct 2009). To some extent, these proposals are able to mitigate the interference from the HeNB 22 to the victim MUEs 30. However, it also reduces the coverage of femto cells 12, which may cause performance degradation of the HUEs 32. Particularly, if the HUE 32 and victim MUE 30 are co-located (typical visitor scenario), the transmission power of the HeNBs 22 can only be best controlled such that the received power of the desired signal intended for the MUE 30 and for the HUE 32 are the same. In other words, the signal-to-interference ratio (SIR) for both the MUE 30 and the HUE 32 are OdB. Otherwise, the SIR of one communication link will be higher than the other, which causes performance degradation for the weaker UE. It is to be noted that if all UEs have to work in 0 dB SIR condition in an OFDMA-based network, high data rate communication can hardly be guaranteed.

For time partitioning, some time resources are exclusively used by either HUE 32 or MUE 30. This approach is straightforward and simple for implementation but it is not an efficient way of using the resources, which leads to low spectral efficiency of the whole wireless system.

Finally, for frequency partitioning, simple techniques such as assigning completely orthogonal frequency resources to marco cells 10 and femto cells 12 are spectrally inefficient, because this limits the frequency reuse in all scenarios.

SUMMARY

It is an object of the present invention to reduce interference at victim terminal devices of heterogeneous cellular networks.

This object is achieved by a method as claimed in claim 1, an apparatus as claimed in claim 12, and a computer program product as claimed in claim 15.

Accordingly, channels of victim terminal devices of neighboring or overlapping cells can be protected from interference caused by a target cell of the cellular network. This is of particular importance in cases of co-channel deployment of macro and femto cells. The proposed solution overcomes the problem that a victim terminal device (e.g. MUE) may be disturbed by a home base station (e.g. HeNB) of a femto cell. It improves the SINR at the victim terminal device and also reduces a so-called "deadzone" area where the victim terminal device is not able to communicate with its serving macro base station (e.g. MeNB) due to strong interference from the home base station nearby.

As another advantage, the proposed solution does not require any signaling between the interfering access device (e.g. home base station) and the interfered serving access device (e.g. macro base station) of the victim terminal device. This provides the advantage that the solution stays in compliance with the related standard (e.g. LTE Release 8). Independent scheduling procedures or algorithms can thus be used for the interfering access device and the interfered serving access device of the victim terminal device. Hence, the victim terminal device is enabled to avoid interference from a nearby co-channel base station without additional standardization effort.

Furthermore, the proposed solution is advantageous in that it only adaptively adjusts the maximum frequency resources that can be used by the interfering access device (e.g. home base station). It does not set any constraint for the scheduling design in the interfering and interfered access devices. System rate maximization and user fairness issues can be addressed independently by vendor specific user scheduler design, e.g., using proportional fair algorithm, in both access devices, respectively. Therefore, it has a minimal impact on the multi-vendor deployment scenario.

The target cell may be a femto cell controlled by a home base station and the neighboring or overlapping cell may be a macro cell controlled by a macro base station. In a more specific example, the macro base station may be a co-channel base station to said home base station. More specifically, it may be the strongest detected co-channel macro base station.

In a more specific exemplary implementation, the measured parameter may be a received power from a base station serving the neighboring or overlapping cell. Of course, other parameters (such as amplitude, error rate or even a measured distance) suitable to indicate the received signal strength could be used to adjust the maximum allowable resources.

In the above or another more specific exemplary implementation, the determined maximum allowable resources may be increased with increasing strength of the received signal. As an example, the maximum allowable resources may be calculated based on a linear relationship with the measured parameter. Then, as an optional feature, the slope of the linear relationship may be controlled to adjust the available range of the maximum allowable resources. These maximum allowable resources may be frequency resources or any other kind of resources (e.g. time, code, bandwidth, etc.) which can be scheduled by an access device to its served terminal devices

As an additional optional feature, the number of victim terminal devices may be detected and the maximum allowable resources may be adjusted based on the detected number of victim terminal devices. Thus, the proposed adaptive resource scheduling adjusts maximum allowable resource according to the received signal strength (e.g. reception power of the strongest macro base station) and can also take into account the number of victim terminal devices. Therefore, spectral efficiency of the system can be improved as compared to approachess which assume fixed frequency partitioning. As an example, the maximum allowable resources may be reduced when the detected number of victim terminal devices increases.

The above apparatus may be implemented as a hardware circuit integrated on a single chip or chip set, or wired on a circuit board. As an alternative, at least parts of the apparatus may be implemented as a software program or routine controlling a processor or computer device. As an example, the software program or routine may be implemented in C type programming language.

Other advantageous modifications are defined in the dependent claims.

BRIEF DESCRIPTION OF THE DRAWINGS

The invention will now be described in greater detail based on embodiments with reference to the accompanying drawings in which:

Fig. 1 shows a schematic network architecture with overlapping macro and femto cells, where the interference control and resource management according to the suggested embodiments can be applied;

Fig. 2 shows a diagram indicating a linear relationship for frequency partitioning as an example for the suggested embodiments;

Fig. 3 shows a schematic block diagram of an access device according to a first embodiment;

Fig. 4 shows a flow diagram of a channel protection procedure according to a second embodiment; and

Fig. 5 shows a schematic block diagram of software-based implementation according to a third embodiment.

<u>DESCRIPTION OF THE EMBODIMENTS</u>

In the following, embodiments of the present invention will be described based on an implementation in a LTE network with overlapping macro and femto cells. However, it is to be noted that the present invention can be applied in various other types of cellular or wireless access networks which can be accessed by terminal devices via control channels.

Data is allocated to UEs in terms of resource blocks (RBs). Depending on the subcarrier spacing, an RB consists of 12 or 24 consecutive sub-carriers in the frequency domain. In the time domain, an RB consists of a plurality of consecutive OFDM symbols. The size of an RB is the same for all bandwidths, therefore the number of available physical resource blocks depends on the bandwidth. Depending on the required data rate, each UE can be assigned one or more RBs in each transmission time interval. The scheduling decision is done in the base station (eNodeB). The user data is carried on the Physical Downlink Shared Channel (PDSCH). Additionally, downlink (DL) control signaling on the Physical Downlink Control Channel (PDCCH) is used to convey the scheduling decisions to individual UEs. The PDCCH is located in the first OFDM symbols of a slot.

Referring to Fig. 1, according to the following embodiments, the HeNBs 22 are configured to adaptively adjust the maximum frequency resources to be used for their HUEs 32 taking into account their distance or the received power from the strongest MeNBs 20, which is made available by using a dedicated receiver or sniffer in the HeNBs 20.

Fig. 2 shows a schematic block diagram of an access device according to a first embodiment, such as the HeNB 22s shown in Fig. 1. The HeNB may be implemented as a software defined radio (SDR) device, where major functionalities are implemented by software routines controlling digital signal processors (DSPs).

The HeNB comprises an antenna subsystem which might consist of one or several antennas or antenna elements for achieving a directed or non-directed antenna characteristic. The antenna subsystem is connected to a radio frequency (RF) subsystem (RF-SS) 220 which may include an analog receiver chain (not shown) followed by an analog-to-digital (ADC) converter (not shown) which converts the received signal to the digital domain and outputs a stream of reception data frames to be forwarded to a baseband subsystem (BB-SS) 222 which could be implemented by at least one digital signal processor (DSP). Additionally, the RF subsystem 220 comprises a transmission chain (not shown) which supplies an analog transmission signal received from the baseband subsystem 222 via a digital-to-analog converter (not shown) to the antenna subsystem for wireless transmission.

According to the first embodiment, a power detector (PD) 2222 is provided, which may be implemented as a part of the baseband subsystem 222. The power detector 2222 is adapted to detect the power or strength of a neighboring MeNB, e.g. the closest MeNB or the MeNB with the strongest signal. To achieve this, the power detector 2222 is supplied with an output signal from a dedicated receiver 224 or sniffer which is adapted to be capable of receiving macro cell signals and thus to receive MUE signals transmitted by MeNBs. Additionally, a resource scheduling function or functionality 2224 is provided (e.g. in the baseband subsystem 222) for allocating resource blocks (RBs) to HUEs served by the HeNB based on the power level detected by the power detector 2222.

It is noted that the power detector 2222 and the resource scheduling functionality 2224 may be implemented as discrete signal processing circuits or, alternatively, as threads or software routines.

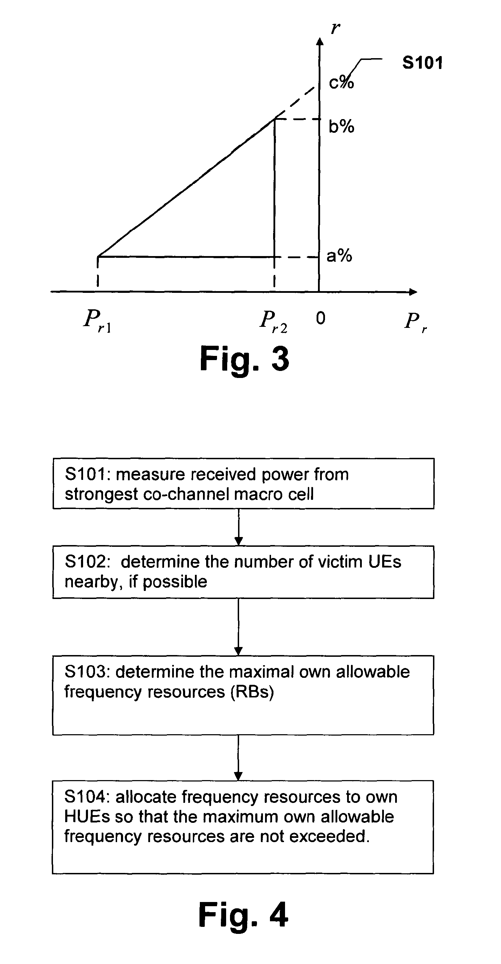

Fig. 3 shows a characteristic curve indicating an exemplary function or relationship to determine the maximum frequency resources used by the HeNBs 22 based on the detected power. The parameter $P_r$ in dBm corresponds to the detected received power, e.g., from the strongest co-channel MeNB 20. The parameter r corresponds to the percentage of the total available frequency resources commonly shared by the HeNB 22 and the MeNB 20. The relationship between r and $P_r$ as shown in Fig. 3 can be written as:

$$r = \alpha \cdot P_r + c\% \qquad\qquad (1.1)$$

where $\alpha = \underline{(b - a)\%}$ is a linear scale that allows to control the slope of the frequen-$P_{r2} - P_{r1}$ cy partitioning curve, $c\%$ is a parameter that can be used to control the range of the percentage of the total available frequency resources. In practice, $\alpha$ and $c\%$ can be optimized by performing system level simulations. As an example, following values, i.e., $P_{r1} \cong -100$ dBM,a = 10, $P_{r2}$ = - 40dBm,b=90 can be set to control the maximum allowable frequency resources that can be used by the HeNBs.

If a high received power is detected from the strongest MeNB(s), this indicates that the nearby $MUE_S$, if there are any, can also receive high power from their own serving MeNBs (assuming MUES will get access to the strongest macro cell). In this situation, the HeNB can reserve a relatively small portion of the frequency resources for the MUEs to use.

Otherwise, if a low received power is detected from the strongest MeNB(s), this indicates that the nearby $MUE_S$, if there are any, will also receive low power from their serving MeNBs (assuming MUEs will get access to the strongest macro cell). In this situation, the HeNB should reserve a relatively large portion of the frequency resources for the MUEs in order to satisfy their request traffic.

As an additional option, the HeNB (e.g. the resource scheduling functionality 2224 of Fig. 2) is capable of adaptively adjusting the maximum frequency resources to be used for their HUEs by taking into account the number of detected victim $MUE_S$, if available. If the number of detected victim MUEs is large (e.g. larger than a predefined threshold value), a larger portion of the frequency resources could be reserved for the MeNB. If not, a smaller portion of the frequency resource could be reserved in order not to waste resources.

The assigned frequency resources for MeNBs and HeNBs do not have to be completely orthogonal, allowing high reuse of the frequency resources. A specific use case could be that (a) victim MUE(s) may be in the vicinity of CSG HeNBs and they are interfered by the HeNBs. Or, victim MUEs may request high date rates traffic but not enough frequency resources are available due to strong interference from the HeNB(s). Or, victim MUEs may be co-located with the HUE(s), e.g., as a typical visitor scenario where two friends are sitting together but their UEs belong to different operators.

Fig. 4 shows a flow diagram of a resource scheduling procedure at a HeNB according to a second embodiment.

As indicated in Fig. 2, each HeNB can be equipped with a sniffer 224, which has the downlink receiver function of a normal user equipment (UE). When the HeNB is powered on, the sniffer 224 measures in step S101 the received power $P_r$ from the strongest co-channel macro cells. I.e., in LTE systems, such measurements can be achieved by measuring the power of a reference signal, e.g., via a Reference Signal Received Power (RSRP) measurement of co-channel macro cells.

Then, in an optional step S102, the HeNB may determine the number of victim UEs, by e.g., detection of a respective uplink transmission (e.g. demodulation reference signal (DMRS) or sounding reference signal (SRS)) from the victim MUE.

Thereafter, in step S103, the HeNB sets the maximum own allowable frequency resources to be used for itself, e.g., number of resource blocks (RBs) according to the flowing formula.

$$BW_a = \begin{cases} (r - n_{victim} \times d\%) \cdot BW_{total}, P_r > 0 \\ BW_{total}, P_r = 0 \end{cases} \qquad (1.2)$$

where r has been defined in connection with the above equation 0, $BW_{total}$ is the total available bandwidth, e.g., number of RBs, defined for the HeNB, $BW_a$ is the maximum allowable number of RBs to be used for the HeNB, $n_{victim}$ is the number of victim UEs detected by the HeNB, d% is the percentage of the bandwidth that should be reserved for each victim UE by the HeNB. If the number of victim UEs is not considered, it may simply be set to zero.

In practice, *r* and d% can be optimized by performing system level simulations. If $P_r$ = 0, this indicates that the HeNB is isolated from the MeNBs, therefore, it is reasonable for the HeNB to use all the available frequency resources.

The HeNB may allocate the available frequency resources to its own HUEs according to a certain scheduler policy, e.g., by using a channel quality indicator (CQI) received from the HUEs. However, the maximum allowable number of RBs should be restricted to $BW_a$.

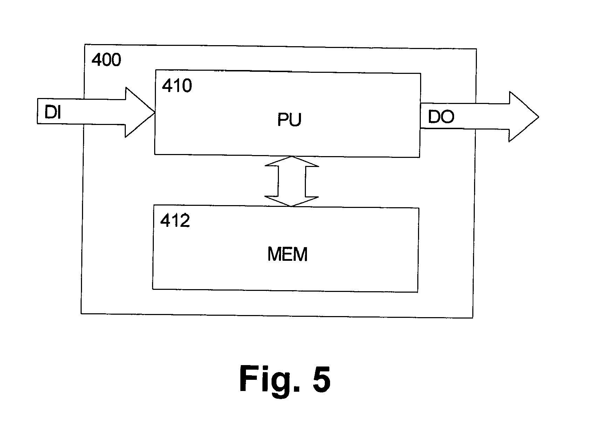

Fig. 5 shows a schematic block diagram of an alternative software-based implementation according to a third embodiment. The required functionalities can be implemented in the baseband subsystem 222 with a processing unit 410, which may be any processor or computer device with a control unit which performs control based on software routines of a control program stored in a memory 412. The control program may also be stored separately on a computer-readable medium. Program code instructions are fetched from the memory 412 and are loaded to the control unit of the processing unit 410 in order to perform the processing steps of Fig. 4, which may be implemented as the above mentioned software routines. The processing steps may be performed on the basis of input data DI and may generate output data DO. In case of the HeNB, the input data DI may correspond to the measured parameter (e.g. received power, number of victim UEs, CQI etc.), and the output data DO may correspond to the determined maximum allowable resources or resource allocations for reduced interference.

Consequently, the functionalities of the above embodiments may be implemented as a computer program product comprising code means for generating each individual step of the frame alignment procedure when run on a computer device or data processor of the respective entity.

In summary, a method and apparatus for protecting a channel of a neighboring or overlapping cell from interference caused by a target cell in a cellular network have been described. To achieve this, a parameter indicating strength of a signal received from the neighboring or overlapping cell is measured and maximum allowable resources which can be scheduled in the target cell are determined based on the measured parameter. Then, resources are allocated to terminal devices served by the target cell so that the maximum allowable resources are not exceeded.

It is apparent that the invention can easily be extended to any access device and system and is not restricted to LTE networks. The proposed embodiments can be implemented in connection with any base station or access device deployed in any cellular or wireless network with overlapping or neighboring cells. The embodiments may thus vary within the scope of the attached claims.

**Claims**

1. A method of protecting a channel of a neighboring or overlapping cell (10) from interference caused by a target cell (12) in a cellular network, said method comprising:

   a. measuring a parameter indicating strength of a signal received from said neighboring or overlapping cell (10);
   b. determining based on said measured parameter maximum allowable resources which can be scheduled in said target cell (12);
   c. allocating resources to terminal devices (32) served by said target cell (12) so that said maximum allowable resources are not exceeded.

2. The method according to claim 1, wherein said target cell is a femto cell (12) controlled by a home base station (22) and said neighboring or overlapping cell (10) is a macro cell controlled by a macro base station (20).

3. The method according to claim 2, wherein said macro base station (20) is a co-channel base station to said home base station (12).

4. The method according to any one of the preceding claims, wherein said measured parameter is a received power from a base station (20) serving said neighboring or overlapping cell (10).

5. The method according to claim 4, wherein said base station is the strongest detected co-channel macro base station (20).

6. The method according to any one of the preceding claims, wherein said determined maximum allowable resources are increased with increasing strength of said received signal.

7. The method according to any one of the preceding claims, wherein said maximum allowable resources are calculated based on a linear relationship with said measured parameter.

8. The method according to claim 7, further comprising controlling the slope of said linear relationship to adjust the available range of said maximum allowable resources.

9. The method according to any one of the preceding claims, wherein said maximum allowable resources are frequency resources.

10. The method according to any one of the preceding claims, further comprising detecting the number of victim terminal devices (30) and adjusting said maximum allowable resources based on said detected number of victim terminal devices (30).

11. The method according to claim 10, wherein said maximum allowable resources is reduced when said detected number of victim terminal devices (30) increases.

**12.** An apparatus for protecting a channel of a neighboring or overlapping cell (10) from interference caused by a target cell (12) in a cellular network, said apparatus comprising:

    a. a detector (2222) for measuring a parameter indicating a signal strength received from said neighboring or overlapping cell (10); and
    b. a resource scheduler (2224) for determining based on said measured parameter maximum allowable resources which can be scheduled in said target cell (12);
    c. wherein said resource scheduler (2224) is adapted to allocate resources to terminal devices (32) served by said target cell (12) so that said maximum allowable resources are not exceeded.

**13.** The apparatus according to claim 12, further comprising a dedicated downlink receiver (224) for receiving said signal from said neighboring or overlapping cell (10).

**14.** A network access device comprising an apparatus according to claim 12 or 13.

**15.** A computer program product comprising code means for producing the steps of method claim 1 when run on a computer device.

**Fig. 1**

**Fig. 2**

## Fig. 3

S101: measure received power from strongest co-channel macro cell

S102: determine the number of victim UEs nearby, if possible

S103: determine the maximal own allowable frequency resources (RBs)

S104: allocate frequency resources to own HUEs so that the maximum own allowable frequency resources are not exceeded.

## Fig. 4

**Fig. 5**

Europäisches
Patentamt

European
Patent Office

Office européen
des brevets

# EUROPEAN SEARCH REPORT

Application Number

EP 10 01 5988

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | INSTITUTE FOR INFORMATION INDUSTRY (III) ET AL: "Channel measurement based interference mitigation schemes for HeNBs", 3GPP DRAFT; R4-094002_HENB_CHANNEL_MEASUREMENT_BASED_INTERFERENCE_MIT IGATION_SCHEMES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050393562, [retrieved on 2009-10-19] * Sections 1 and 2.1 * ----- | 1-15 | INV. H04W72/08 ADD. H04W84/04 |
| X | ALCATEL-LUCENT ET AL: "Technology Issues for Heterogeneous Network for LTE-A", 3GPP DRAFT; R1-093788_HTN_ISSUES_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050388306, [retrieved on 2009-10-06] * Section 4.2 * ----- -/-- | 1-15 | TECHNICAL FIELDS SEARCHED (IPC) H04W |

The present search report has been drawn up for all claims

| Place of search | Date of completion of the search | Examiner |
|---|---|---|
| Munich | 1 April 2011 | Aguiar, Jorge |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 10 01 5988

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NOKIA SIEMENS NETWORKS ET AL: "Autonomous CC selection for heterogeneous environments", 3GPP DRAFT; R1-094659_ACCS_HETNET_V02, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20091109, 9 November 2009 (2009-11-09), XP050389064, [retrieved on 2009-11-02] * Section 2.3 * ----- | 1-15 | |
| X | GARCIA L G U ET AL: "Autonomous component carrier selection: interference management in local area environments for LTE-advanced", IEEE COMMUNICATIONS MAGAZINE, IEEE SERVICE CENTER, PISCATAWAY, US, vol. 47, no. 9, 1 September 2009 (2009-09-01), pages 110-116, XP011283372, ISSN: 0163-6804, DOI: DOI:10.1109/MCOM.2009.5277463 * Section "Secondary Component Carrier Selection" * ----- -/-- | 1-15 | TECHNICAL FIELDS SEARCHED (IPC) |

The present search report has been drawn up for all claims

| Place of search | Date of completion of the search | Examiner |
|---|---|---|
| Munich | 1 April 2011 | Aguiar, Jorge |

EPO FORM 1503 03.82 (P04C01)

Europäisches
Patentamt

European
Patent Office

Office européen
des brevets

# EUROPEAN SEARCH REPORT

**Application Number**

EP 10 01 5988

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KYOCERA ET AL: "Performance Evaluation of HeNB Interference Control Techniques", 3GPP DRAFT; R1-101514_HENB_INTERFERENCE_CONTROL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Francisco, USA; 20100222, 16 February 2010 (2010-02-16), XP050418956, [retrieved on 2010-02-16] * Section 5 * | 10,11 | |

-----

**TECHNICAL FIELDS SEARCHED (IPC)**

The present search report has been drawn up for all claims

| Place of search | Date of completion of the search | Examiner |
|---|---|---|
| Munich | 1 April 2011 | Aguiar, Jorge |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Interference control for LTE Rel-9 HeNB cells,* November 2009

- *HeNB to Macro eNB Downlink Interference Mitigation with Power Control,* October 2009